# EUROPÄISCHE PATENTANMELDUNG

(11) **EP 0 943 498 A1**
(43) Veröffentlichungstag der Anmeldung: **22.09.1999**
(21) Anmeldenummer: 99101684.1
(22) Anmeldetag: 08.02.1999
(51) Int. Cl.: B60R 21/06, B60R 7/02, B60R 5/04

(54) **Vorrichtung zur Sicherung von Ladegut**

(30) Priorität: 14.03.1998 DE 19811162
(71) Anmelder: Volkswagen Aktiengesellschaft, 38436 Wolfsburg (DE)
(72) Erfinder: Thill, Albert, Dipl.-Ing., 38554 Weyhausen (DE)

(57) **Zusammenfassung**

Die vorliegende Erfindung betrifft eine Vorrichtung zur Sicherung von Ladegut in einem Laderaum (8) hinter einer schrägen Sitz- oder Sitzbankrückenlehne (4) eines Kraftfahrzeugs (2), mit einer hinter der Rückenlehne (4) angeordneten Rolloanordnung (12), die ein flächig aufspannbares flexibles Rollo (18) und einen Aufrollmechanismus (16) zum Aufrollen des Rollos (18) umfaßt. Um bei einem Unfall ein Durchbrechen der Rückenlehne (4) durch mitgeführtes, nach vorne beschleunigtes Ladegut zu verhindern oder zu erschweren und eine Nutzung eines beim Verstauen von quaderförmigem Ladegut unmittelbar hinter der schrägen Rückenlehne (4) entstehenden zwickelförmigen Totraums zu ermöglichen, ist das Rollo (18) erfindungsgemäß unter Bildung eines nach hinten zu geschlossenen Staufachs (50) im wesentlichen vertikal hinter der Rückenlehne (4) aufspannbar.

## Beschreibung

Die vorliegende Erfindung betrifft eine Vorrichtung zur Sicherung von Ladegut in einem Laderaum hinter einer schrägen Sitz- oder Sitzbankrückenlehne eines Kraftfahrzeugs, mit einer hinter der Rückenlehne angeordneten Rolloanordnung, die ein flächig aufspannbares flexibles Rollo und einen Aufrollmechanismus zum Aufrollen des Rollos umfaßt.

Insbesondere die unter der Bezeichnung Kombinationskraftwagen oder unter dem Kürzel Kombi oder Variant angebotenen Personenkraftwagen aber auch andere Personenkraftwagen weisen einen Aufbau auf, bei dem ein hinter der Rücksitzbank angeordneter Laderaum nur durch die schräge Rückenlehne der Rücksitzbank sowie ggf. auf seiner Oberseite durch eine abnehmbare Hutablage vom Fahrgastraum getrennt ist. Gewöhnlich weisen diese Fahrzeuge eine Hecktüre oder Heckklappe auf, die einen Zugang zum Laderaum ermöglicht. Üblicherweise ist mindestens ein Teil der Rückenlehne verschwenkbar ausgebildet, so daß er sich bei Bedarf zur Vergrößerung des Laderaums nach vorne klappen läßt.

Derartige Fahrzeuge eignen sich gut zum Transport von Personen und gestatten zusätzlich auch den Transport von sperrigem Ladegut oder größeren Ladegutmengen. Jedoch hat sich gezeigt, daß bei Unfällen und insbesondere bei Frontalzusammenstößen schwere Verietsungen von Fahrzeuginsassen auftreten können, wenn nicht oder nur unzureichend gesichertes Ladegut im Laderaum des Fahrzeugs durch den Aufprall nach vorne beschleunigt wird und die Rückenlehne durchbricht oder deren Schwenkgelenke zerstört, so daß es mit großer Wucht von hinten auf die Fahrzeuginsassen trifft (vgl. ADAC motorwelt 11/95, S. 50 - 53 und ADAC motorwelt 7/92, S. 38 bis 43).

Ein weiterer Nachteil derartiger Fahrzeuge besteht darin, daß beim Beladen des nach vorne zu durch die schräge Rückseite der Rückenlehne begrenzten Laderaums mit quaderförmigem Ladegut zwischen der Rückseite der Rückenlehne und dem Ladegut ein zwickelförmiger Totraum gebildet wird, der sich nicht oder nur schlecht als Stauraum nutzen läßt. Auf der anderen Seite werden im Laderaum zusätzlich zum Ladegut häufig bordeigene Kleinteile mitgeführt, wie beispielsweise Werkzeug, Verbandszeug, Motoröl, Türschloßenteiser, Taschenlampe oder dergleichen, für deren Unterbringung zumeist kein geschlossenes Abteil zur Verfügung steht, das ein Herumrutschen dieser Teile im Laderaum beim Bremsen oder beim Durchfahren scharfer Kurven verhindert.

Um durch Ladegut bedingte Verletzungen von Fahrzeuginsassen zu vermeiden, wurde bereits eine Vielzahl von Vorrichtungen zur Sicherung von Ladegut vorgeschlagen. Darunter finden sich auch solche mit einer Rolloanordnung, die ein von einem Netz oder Gewebe gebildetes, als Rückhalteelement dienendes Rollo sowie einen Aufrollmechanismus umfassen. Diese Vorrichtungen weisen den Vorteil auf, daß sich das auf dem Aufrollmechanismus aufgerollte Rollo bei Bedarf zum Aufspannen mit einer Hand schnell und einfach ausziehen und noch einfacher wieder aufrollen läßt, wenn es nicht mehr benötigt wird, so daß sie im Gegensatz zu fest eingebauten Gittern oder dergleichen flexibler sind.

Eine Vorrichtung der eingangs genannten Art ist beispielsweise aus der DE 43 00 904 A1 der Anmelderin bekannt, bei der zur Sicherung von sperrigem, über eine nach unten geklappte Rückenlehne der Rücksitzbank in den Fahrgastraum ragendem Ladegut eine Rolloanordnung vorgesehen ist, die einen hinter dem oberen Ende der aufrechten Rückenlehne und quer zur Fahrtrichtung zwischen gegenüberliegenden Innenwänden des Fahrzeugs angeordneten Aufrollmechanismus umfaßt, von dem sich ein als Netz ausgebildetes Rollo in Fahrtrichtung ausziehen läßt, um es nahe vor dem Ladegut und dieses wenigstens teilweise umspannend auf dem von der umgeklappten Rückenlehne gebildeten Boden des Laderaums zu befestigen. Das Netz eignet sich dort jedoch nicht zur Sicherung von Ladegut bei aufrechter Rückenlehne, da es sich dann weder in Fahrtrichtung ausziehen noch das Ladegut umspannend vor diesem befestigen läßt.

Eine weitere Vorrichtung der eingangs genannten Art ist aus der DE OS 27 39 741 bekannt, wobei dort zwei Rückhalteelemente in Form von Rollos vorhanden sind, für die jeweils einer von zwei nebeneinander hinter dem oberen Ende der Rückenlehne der Rücksitzbank angeordneten Aufrollmechanismen vorgesehen ist. Das eine Rollo dient zur Abtrennung des Fahrgastbereichs und ist in der ausgezogenen Stellung mit seinem freien Rand im Dachbereich einhängbar, während das andere Rollo zur Abdeckung von Ladegut dient und mit seinem freien Rand im Bereich einer Hecktüre des mit der Vorrichtung ausgestatteten Fahrzeugs befestigbar ist. Während die bekannte Vorrichtung verhindert, daß Ladegut über die Rückenlehne hinweg in den Fahrgastraum eindringt bzw. aus dem Laderaum nach oben geworfen wird, kann sie nicht dazu beitragen, das Durchbrechen der Rückenlehne durch schweres Ladegut zu verhindern.

Ausgehend hiervon liegt der Erfindung die Aufgabe zugrunde, eine Vorrichtung der eingangs genannten Art dahingehend zu verbessern, daß sich mit Hilfe des Rollos bei einem Unfall ein Durchbrechen der Rückenlehne durch mitgeführtes, nach vorne beschleunigtes Ladegut verhindern oder erschweren und gleichzeitig ein beim Verstauen von quaderförmigem Ladegut unmittelbar hinter der schrägen Rückenlehne entstehender Totraum nutzen läßt.

Diese Aufgabe wird erfindungsgemäß dadurch gelöst, daß das Rollo hinter der schrägen Rückenlehne im wesentlichen vertikal aufspannbar ist, so daß zwischen der Rückseite der schrägen Rückenlehne und dem ganz oder teilweise ausgezogenen und vertikal aufgespannten Rollo ein nach hinten zum Laderaum hin geschlossenes Staufach gebildet wird, das sich gut zur Unterbringung von mitgeführten Kleinteilen eignet. Weiter bildet das hinter der Rückenlehne aufgespannte Rollo eine zusätzliche Sicherung, die im Laderaum nach vorne beschleunigtes Ladegut abfängt und abbremst, bevor es auf die Rückenlehne auftrifft. Darüberhinaus wird durch das Rollo ein vertikaler vorderer Abschluß des Laderaums geschaffen, gegen den sich quaderförmiges Ladegut anlegen und damit ohne Totraum verstauen läßt.

Grundsätzlich ist es möglich, den Aufrollmechanismus oben in der Nähe des oberen Endes der Rückenlehne oder unten am Boden des Laderaums anzubringen und demgemäß das aufgewickelte Rollo nach unten bzw. nach oben aufzuspannen, wobei sein freier Rand entsprechend an einer am Laderaumboden unterhalb des Aufrollmechanismus bzw. in der Nähe des oberen Endes der Rückenlehne oberhalb des Aufrollmechanismus angebrachten Befestigungseinrichtung eingehängt oder auf sonstige Weise lösbar befestigt wird, so daß das Rollo im wesentlichen vertikal angeordnet ist.

Gemäß einer bevorzugten Ausgestaltung der Erfindung ist der Aufrollmechanismus fahrzeugfest hinter einer verschwenkbaren Rückenlehne montiert. Eine fahrzeugfeste Anbringung bedeutet hier, daß der Aufrollmechanismus unabhängig von einer Schwenkbewegung der Rückenlehne in seiner Lage bleibt, jedoch ggf. auf einfache Weise, zum Beispiel durch Einhängen in seitliche Halterungen, befestigt sein kann, so daß er sich schnell und einfach ausbauen läßt. Bei einer derartigen fahrzeugfesten Anbringung des Aufrollmechanismus läßt sich das Staufach nicht nur von seiner Rückseite her durch Aufrollen des Rollos, sondern zusätzlich auch von seinem oberen Ende her durch Verschwenken der Rückenlehne nach vorne öffnen. Bei einer fahrzeugfesten Anbringung des Aufrollmechanismus hinter dem oberen Ende der Rückenlehne kann zudem gegenüber vom Aufrollmechanismus am oberen Ende der Rückenlehne eine weitere Befestigungseinrichtung für das aufgespannte Rollo vorgesehen sein, so daß sich über der umgeklappten Rückenlehne nach vorne in den Fahrgastraum ragendes sperriges Ladegut in ähnlicher Weise sichern läßt, wie in der eingangs genannten DE 43 00 904 A1 beschrieben.

Alternativ kann der Aufrollmechanismus aber auch auf der Unterseite einer abnehmbaren Hutablage oder am oberen Ende der Rückenlehne angebracht werden. Im zuerst genannten Fall kann die gesamte Vorrichtung bis auf die Befestigungseinrichtungen allein durch Entfernen der Hutablage aus dem Fahrzeug ausgebaut werden, während im zuletzt genannten Fall ähnliche Vorteile wie bei einem fahrzeugfesten Aufrollmechanismus erzielt werden können, wobei sich jedoch die Rückhaltewirkung des Rollos und der Rückenlehne weniger gut ergänzen und zudem das Staufach durch Verschwenken der Rückenlehne nach vorne nicht geöffnet werden kann.

Ein Öffnen des Staufachs durch Verschwenken der Rückenlehne ist jedoch auch in diesem Fall möglich, wenn gemäß einer weiteren vorteilhaften Ausgestaltung der Erfindung an Stelle der Befestigungseinrichtung für das Rollo eine auf dem Laderaumboden angeordnete Umlenkeinrichtung vorgesehen ist, die es gestattet, das Rollo wieder zurück zu einer fahrzeugfesten Befestigungseinrichtung in der Nähe des Aufrollmechanismus umzulenken, so daß sich das Rollo vom Aufrollmechanismus nach unten zur Umlenkeinrichtung und von dort wieder nach oben zur Befestigungseinrichtung aufspannen läßt. Das Rollo kann dabei entweder im Abstand vom unteren Ende der Rückenlehne um 180 Grad umgelenkt werden, so daß es sich zweilagig von oben nach unten und zurück nach oben erstreckt, oder die Umlenkeinrichtung kann sich in Fahrtrichtung ein Stück weit am Laderaumboden entlang erstrecken, so daß das Rollo eine das Staufach vorne, unten und hinten begrenzende Tasche bildet. Alternativ kann ein taschenartiges Staufach auch vorne und hinten jeweils von einem Abschnitt des Rollos begrenzt werden, wobei die beiden Abschnitte zum Aufrollen doppelt übereinandergelegt werden.

Eine andere bevorzugte Ausgestaltung der Erfindung sieht vor, daß weitere Befestigungseinrichtungen für das aufgespannte Rollo an einer Hecktüre des Kraftfahrzeugs, horizontal hinter dem Aufrollmechanismus im Bereich einer Türöffnung der Hecktüre oder oberhalb des Aufrollmechanismus an einem Dachhimmel des Fahrzeugs angebracht sind, so daß sich das Rollo bei Bedarf in einer anderen Ausrichtung und Lage aufspannen läßt.

Da bei den meisten Kombinationskraftwagen oder Pkws mit einem durch die Rückenlehne der Rücksitzbank vom Fahrgastraum getrennten Laderaum der letztere wegen den beidseitig hinter der Rückenlehne angeordneten Radhäusern zwischen dem oberen Rand der Rückenlehne und dem Laderaumboden keine gleichbleibende Breite aufweist, sondern sich gewöhnlich von oben nach unten verjüngt, während die Breite des Laderaums in horizontaler Richtung zwischen dem oberen Ende der Rückenlehne und der Türöffnung der Hecktüre bzw. in vertikaler Richtung zwischen dem oberen Ende der Rückenlehne und dem Dachhimmel im wesentlichen gleichbleibend ist, sieht eine weitere bevorzugte Ausgestaltung der Erfindung vor, daß sich ein an den freien Rand des Rollos angrenzender Abschnitt des Rollos entsprechend dem Profil des Laderaums zwischen den Radhäusern verjüngt, und daß dieser Abschnitt beim Aufspannen des Rollos zwischen dem Aufrollmechanismus und den weiteren Befestigungseinrichtungen umgeschlagen wird, so daß das horizontal nach hinten oder vertikal nach oben aufgespannte Rollo teilweise doppellagig ist.

Die Befestigungseinrichtung kann vorzugsweise zwei Haken- oder Rastelemente umfassen, die in der Nähe der entgegengesetzten Seitenwände des Kraftfahrzeugs angeordnet sind und sich mit Halteelementen am Rollo in Eingriff bringen lassen, zum Beispiel den entgegengesetzten überstehenden Stirnenden einer Zugstange am freien Rand des Rollos. Bei Verwendung von Hakenelementen sind diese vorzugsweise so angeordnet, daß eine von der Aufrolleinrichtung auf das Rollo ausgeübte Zugkraft die Halteelemente in Eingriff mit den Hakenelementen der Befestigungseinrichtung zieht.
Eine weitere vorteilhafte Ausgestaltung der Erfindung sieht vor, daß das Staufach an den Seiten mindestens teilweise verschließbar ist, um ein seitliches Herausrutschen von darin aufbewahrten Kleinteilen zu verhindern. Als Verschluß dienen vorzugsweise seitliche Begrenzungen aus einem flexiblen Material, die zweckmäßig lösbar mit dem Rollo und/oder mit der Rückenlehne verbindbar sind, beispielsweise mit Hilfe von Streifen oder Flecken aus Klett- bzw. Flauschmaterial, Clips oder Druckknöpfen, so daß eine schnelle Anbringung möglich ist.

Im folgenden wird die Erfindung anhand einiger in der Zeichnung dargestellter Ausführungsbeispiele näher
erläutert. Es zeigen:
Fig. 1: eine teilweise geschnittene Seitenansicht des hinteren Endes eines erfindungsgemäßen Kombinationskraftwagens mit einer Rücksitzbank mit schräger Rückenlehne, hinter der ein Rollo einer Rolloanordnung ein Staufach begrenzt;
Fig. 2: eine Längsschnittansicht des hinteren Teils des Kraftwagens, die weitere Möglichkeiten zur Befestigung des Rollos sowie den Zugang zum Staufach durch Verschwenken der Rückenlehne nach vorne zeigt;
Fig. 3: eine Ansicht entsprechend Fig. 2, jedoch bei vollständig umgeklappter Rückenlehne und über dieser in den Fahrgastraum ragendem Ladegut, das mit dem Rollo gesichert ist;
Fig. 4: eine perspektivische Ansicht der Rolloanordnung aus Fig. 1 und 2, jedoch mit seitlichen Staufachbegrenzungen;
Fig. 5: eine perspektivische Ansicht entsprechend Fig. 5, jedoch mit anderen seittichen Staufachbegrenzungen;
Fig. 6: eine perspektivische Ansicht entsprechend Fig. 5, jedoch mit noch anderen seitlichen Staufachbegrenzungen;
Fig. 7: eine Ansicht entsprechend Fig. 1, jedoch mit einer anderen Rolloanordnung.

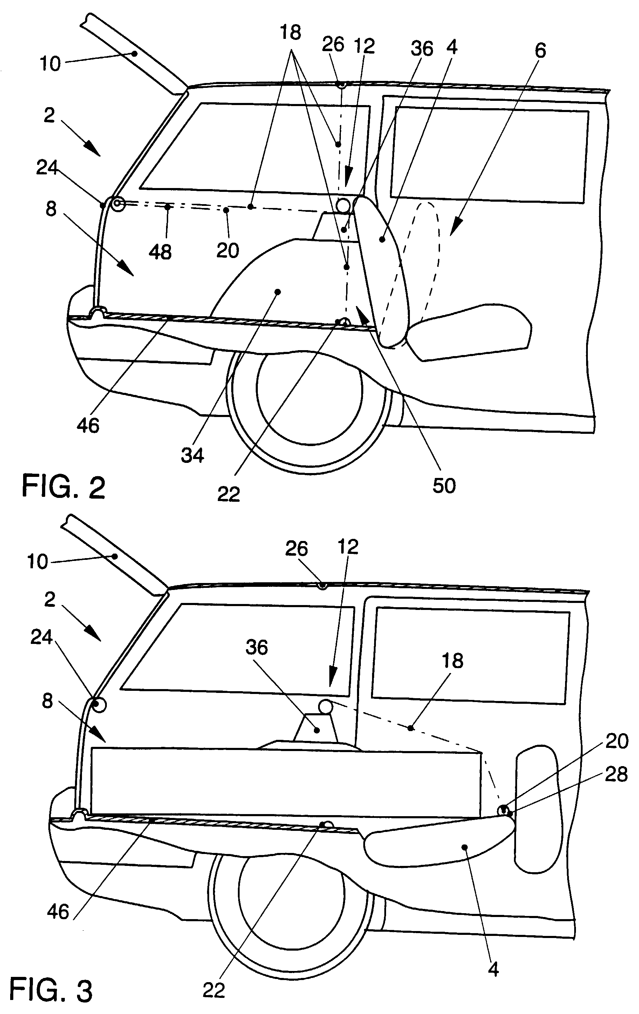

Der in der Zeichnung dargestellte Kombinationskraftwagen (Kombi) 2 weist hinter der schrägen Rückenlehne 4 seiner Rücksitzbank 6 einen Laderaum 8 auf, der am Heck des Kraftwagens 2 durch eine zum Öffnen nach oben verschwenkbare Hecktüre 10 verschlossen ist. Hinter der nach vorne umklappbaren Rückenlehne 4 ist eine Rolloanordnung 12 vorgesehen, die im wesentlichen ein auf einer Trägerrolle 14 eines Aufrollmechanismus 16 aufgewickeltes flexibles Rollo 18 umfaßt. Das Rollo 18 läßt sich entgegen der Kraft einer in den Aufrollmechanismus 16 eingebauten Torsionsfeder (nicht dargestellt) von der Trägerrolle 14 abziehen und durch Befestigung seines freien Randes 20 an verschiedenen, paarweise im Abstand vom Aufrollmechanismus 16 angeordneten Befestigungselementen 22, 24, 26, 28 innerhalb des Kraftwagens 2 in unterschiedlichen Ausrichtungen und Lagen flächig aufspannen, wie am besten in den Figuren 2 und 3 dargestellt.

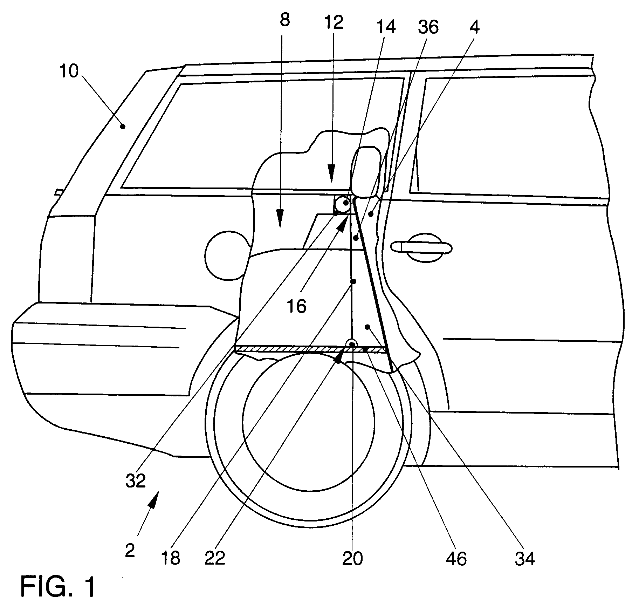

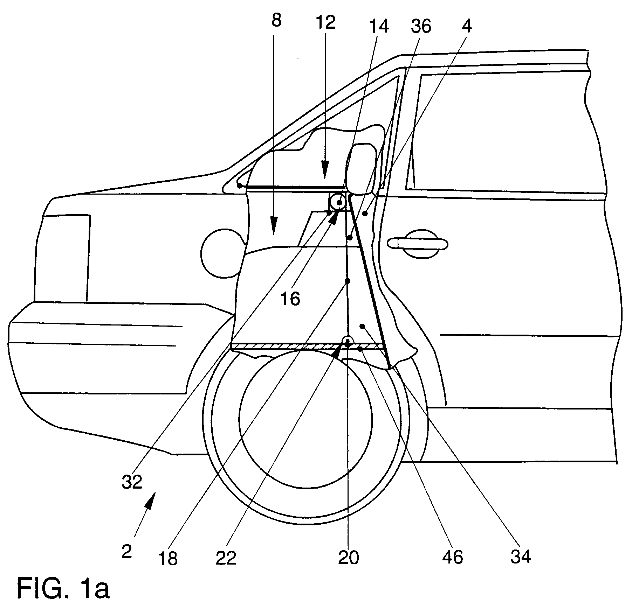

Der Aufrollmechanismus 16 weist ein die Trägerrolle 14 umschließendes langgestrecktes Gehäuse 32 auf, das bei dem Ausführungsbeispiel der Figuren 1 bis 6 fahrzeugfest hinter dem oberen Ende der Rückenlehne 4 angeordnet ist, wobei die Stirnenden des Gehäuses 32 auf der Oberseite eines nach oben über jedes der beiden Radhäuser 34 überstehenden Federbeindoms 36 aufliegen und dort an den gegenüberliegenden Innenwänden des Kraftwagens 2 befestigt sind. Während in den Figuren ein quaderförmiges Gehäuse 32 mit einem stationären, schräg nach unten und hinten weisenden Austrittsschlitz 38 für das Rollo 18 dargestellt ist, ist das Gehäuse 32 vorzugsweise zylindrisch geformt und an seinen Stirnenden um die Längsachse der Trägerrolle 14 drehbar gelagert, so daß sich der Austrittsschlitz 38 der Ausrichtung des Rollos 18 folgend mitdrehen kann.

Innerhalb des Gehäuses 32 erstreckt sich die Trägerrolle 14 quer zur Fahrtrichtung über einen Großteil der Länge des Gehäuses 32 und ist im Bereich ihren Stirnenden in Drehlagern des Gehäuses 32 drehbar gelagert. Die Torsionsfeder ist so zwischen dem Gehäuse 32 und einem Stirnende der Trägerrolle 14 angebracht, daß sie beim Abziehen des Rollos 18 von der Trägerrolle 14 gespannt wird und das Rollo 18 wieder selbsttätig aufwickelt, wenn sein freier Rand 20 von den jeweiligen Befestigungselementen 22, 24, 26, 28 gelöst wird. Der Aufrollmechanismus 16 umfaßt weiter eine Sperre, die ähnlich wie die Sperre eines Sicherheitsgurtes ausgebildet ist und bei einem ruckartigen Zug am Rollo 18 ein weiteres Abziehen desselben von der Trägerrolle 14 verhindert, wenn beispielsweise bei einem Unfall Ladegut mit großer Wucht auf das Rollo 18 auftrifft.
Das Rollo 18 selbst kann aus einem reißfesten Gewebematerial, einem Netzmaterial, einer Mehrzahl schmaler und gelenkig miteinander verbundener paralleler Kunststoffleisten oder aus einem anderen geeigneten flexiblen Material bestehen, das sich auf einer Trägetrolle 14 aufwickeln bzw. flächig aufspannen läßt. Am freien Rand 20 des Rollos 18 ist eine dünne Querstange 40 angebracht, deren entgegengesetzte Stirnenden 42 in seitlicher Richtung etwas über den benachbarten Seitenrand des Rollos 18 überstehen. In der Mitte der Stange 40 befindet sich eine Schlaufe oder Lasche 44, an der sich das auf die Trägerrolle 14 aufgewickelte Rollo 18 mit einer Hand ergreifen und durch den Austrittsschlitz 38 des Gehäuses 32 von der Trägetrolle 14 abziehen läßt.

Die Befestigungselemente 22, 24, 26, 28 sind bei den dargestellten Ausführungsbeispielen als Haken ausgebildet, die sich auf ihrer vom Aufrollmechanismus 16 abgewandten Seite öffnen, so daß die von der Torsionsfeder auf die Trägerrolle 14 ausgeübte Kraft bewirkt, daß die überstehenden Stirnenden 42 der Querstange 40 nach dem Einhängen in die Haken 22, 24, 26, 28 in diesen festgehalten werden, und daß das eingehängte Rollo 18 gespannt gehalten wird. Alternativ dazu können jedoch auch andere bekannte Befestigungselemente verwendet werden, die jedoch ausreichend stark dimensioniert sein müssen, um beim Aufprall von Ladegut auf das Rollo 18 einen ausreichenden Widerstand zu bieten.

Bei den Ausführungsbeispielen in den Figuren 1 bis 6 sind zwei der Haken 22 genau unterhalb des Aufrollmechanismus 16 auf beiden Seiten eines ebenen Bodens 46 des Laderaums 8 angebracht, so daß sich das Rollo 18 vom Aufrollmechanismus 16 aus vertikal nach unten aufspannen läßt. Ein an den freien Rand 20 des Rollos 18 angrenzender Rolloabschnitt 48 ist dort in Richtung des freien Randes 20 verjüngt, wobei er seitlich an die Kontur der beiden gegenüberliegenden Radhäuser 34 angepaßt ist, so daß die beiden Seitenränder des Rollos 18 nach dem Aufspannen in diesem Bereich gegen die Radhäuser 34 anliegen. Dadurch wird zwischen der Rückseite der schrägen Rückenlehne 4 und dem vertikal aufgespannten Rollo 18 ein geschlossenes Staufach 50 gebildet, das sich gut zum Verstauen von mitgeführten Kleinteilen, wie beispielsweise Verbandszeug, Bordwerkzeug, Eiskratzer oder anderen bordeigenen Gegenständen eignet. Das in Fahrtrichtung von der Rückseite der Rückenlehne 4 und seitlich durch die Innenwände des Laderaums 8 begrenzte Staufach 50 ist sowohl vom Heck des Kraftwagens 2 her zugänglich, indem das Rollo 18 von dort aus geöffnet wird, oder alternativ von oben her, indem die Rückenlehne 4 etwas nach vorne geklappt wird, wie in Fig. 2 in unterbrochenen Linien dargestellt, beispielsweise wenn bei voller Beladung des Laderaums 8 ein Zugang zum Staufach 50 erforderlich ist.

Das vertikal aufgespannte Rollo 18 bildet ein zusätzliches Rückhalteelement, das bei einem Unfall ungesichertes, nach vorne beschleunigtes Ladegut im Laderaum 8 auffängt und abbremst, bevor es auf die Rückenlehne 4 aufprallt. Durch das Abbremsen des Ladeguts wird dessen kinetische Energie und damit auch die Gefahr eines Durchbrechens der Rückenlehne 4 oder eines Ausreißens der Schwenkgelenke der ganz oder teilweise umklappbaren Rückenlehne 4 verringert.

Weitere Hakenpaare 24, 26, 28 zur Befestigung des Rollos 18 sind horizontal hinter dem Aufrollmechanismus 16 in der Nähe einer Türöffnung der Hecktüre 10, im wesentlichen oberhalb des Aufrollmechanismus 16 unter einem Dachhimmel des Kraftwagens 2 sowie an der Rückseite der Rückenlehne 4 in unmittelbarer Nähe des Aufrollmechanismus 16 vorgesehen, so daß das Rollo 18 bei Bedarf in den in Fig. 2 und 3 strichpunktiert dargestellten Stellungen aufgespannt werden kann, um Ladegut im Laderaum 8 nach oben abzudecken, oberhalb der Rückenlehne 4 eine Sperre zwischen dem Laderaum 8 und dem Fahrgastraum zu bilden oder sperriges, über der nach vorne umgeklappten Rückenlehne 4 in den Fahrgastraum ragendes Ladegut zu sichern (vgl. Fig. 3), wobei die zuletzt genannte Art der Sicherung ausführlich in der DE 43 00 904 A1 beschrieben ist, deren Offenbarung durch Bezugnahme hier aufgenommen wird.

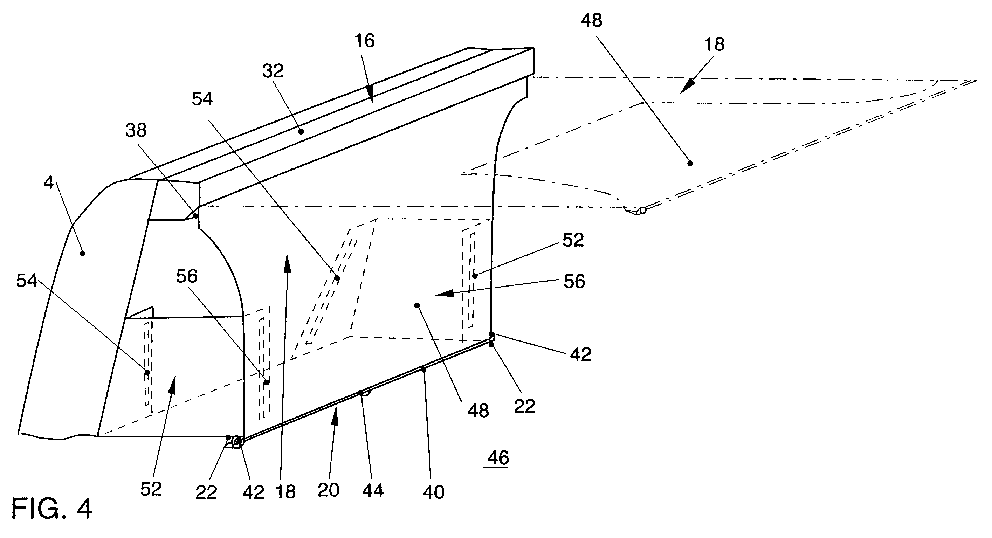

Bei den Ausführungsbeispielen in den Figuren 4 bis 6 ist das Staufach 50 an beiden Seiten durch flexible Begrenzungen 52 teilweise verschlossen, die sich vom Laderaumboden 46 aus bis etwa über die Hälfte der Strecke zwischen dem Laderaumboden 46 und dem Aufrollmechanismus 16 nach oben erstrecken. Diese Begrenzungen 52 tragen dazu bei, das Rollo 18 in seiner vertikalen Ausrichtung zu halten und Geräusche zu dämpfen, die entstehen, wenn die im Staufach 50 mitgeführten Gegenstände beim Durchfahren einer scharfen Kurve gegen eines der Radhäuser 34 rutschen. Außerdem verhindern sie einen Austritt von Kleinteilen aus dem Staufach im Bereich der lose gegen die Radhäuser 34 anliegenden Seitenränder des Rollos 18.

Bei dem in Fig. 4 dargestellten Ausführungsbeispiel sind die beiden aus einem Gewebematerial bestehenden Begrenzungen 52 getrennt vom Rollo 15 und von der Rückenlehne 4 ausgebildet und an ihrem nach innen umgebogenen vorderen bzw. hinteren Seitenrand mit einem Streifen 54, 56 aus Klettmaterial versehen, der an einem entsprechenden Streifen Flauschmaterial auf der Rückseite der Rückenlehne 4 bzw. auf der in Fahrtrichtung weisenden Vorderseite des Rollos 18 haftet. An Stelle von Streifen oder Flecken aus einer Klett/Flausch-Materialpaarung können auch Druckknöpfe, Clips oder andere lösbare Verbindungselemente vorgesehen sein.

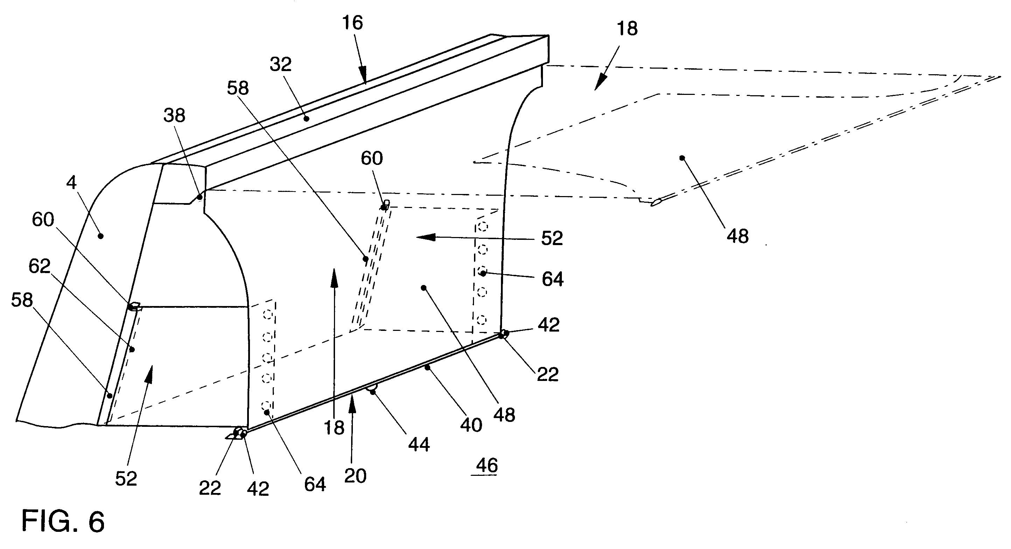

Bei dem in Fig. 6 dargestellten Ausführungsbeispiel erfolgt die Befestigung der seitlichen Begrenzungen 52 in zwei im Abstand voneinander in der Nähe der Radhäuser 34 an der Rückenlehne 4 angebrachten parallelen Schienen 58, die sich von oben nach unten über den unteren Teil der Rückseite der Rückenlehne 4 erstrecken und als Aufnahme für eine von oben her einführbare Haltestange 60 dienen, mit welcher der vordere Rand der benachbarten Begrenzung 52 fest verbunden ist. Die Schienen 58 weisen jeweils eine nach hinten weisende, in ihrer Längsrichtung verlaufende Schlitzöffnung 62 auf, durch welche die seitliche Begrenzung 52 nach dem Einführen der Haltestange 60 in die Schiene 58 austritt. Die Befestigung der seitlichen Begrenzungen 52 am Rollo erfolgt durch Druckknöpfe 64 in ähnlicher Weise, wie oben in Verbindung mit Fig. 4 beschrieben.

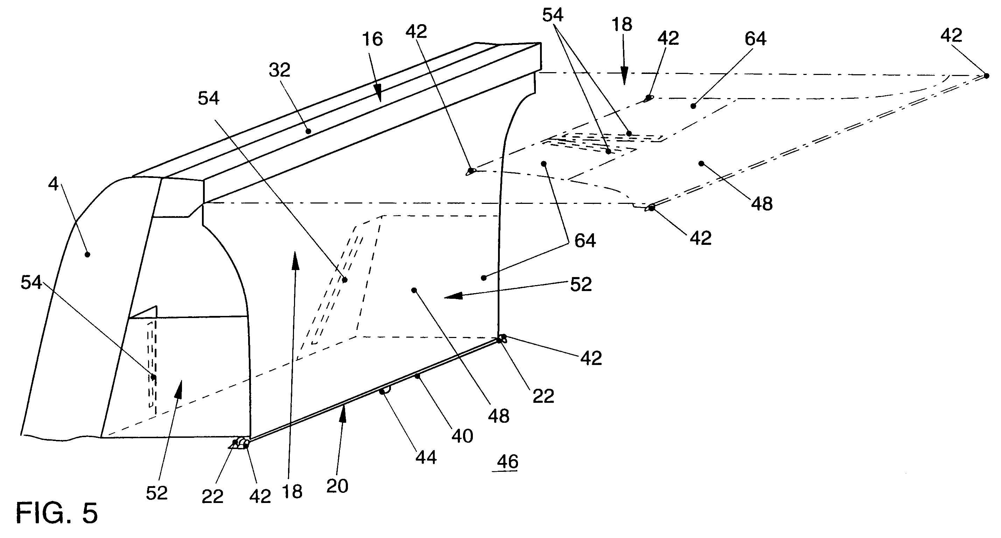

Demgegenüber sind die beiden Begrenzungen 52 bei dem Ausführungsbeispiel der Fig. 5 einstückig mit dem Rollo 18 verbunden, wobei sie angrenzend an den freien Rand 20 in Form von integrierten Lappen 66 über seine Seitenränder überstehen. Die Lappen 66 sind an ihrem nach innen umgebogenen hinteren Rand ebenfalls mit Streifen 54 aus Klettmaterial versehen, die sich mit entsprechenden Streifen aus Flauschmaterial auf der Rückseite der Rückenlehne 4 verbinden lassen. Zum Aufwickeln des Rollos 18 können die Lappen 66 entlang von dessen Seitenrändern nach innen umgeschlagen und mittels der Klettmaterialstreifen 54 auf Flauschmaterialstreifen befestigt werden, die an entsprechenden Stellen auf der Vorder- oder Rückseite des Rollos 18 angebracht sind.

In den Figuren 4 bis 6 ist das Rollo 18 in strichpunktierten Linien in einer horizontalen Ausrichtung dargestellt, wobei der verjüngte Abschnitt 48 des Rollos 18 in Fahrtrichtung umgeschlagen ist, so daß das Rollo 18 zur Abdeckung des Laderaums 8 nach oben eine gleichbleibende Breite aufweist. Zwischen dem verjüngten Abschnitt 48 und dem Rest des Rollos 18 ist eine weitere Querstange 40 mit seitlich überstehenden Stirnenden 42 vorgesehen, die es ermöglichen, das aufgespannte Rollo 18 an den Befestigungselementen 24 und 26 einzuhängen. In Fig. 6 sind auch die nach innen umgeschlagenen Lappen 66 in strichpunktierten Linien dargestellt.

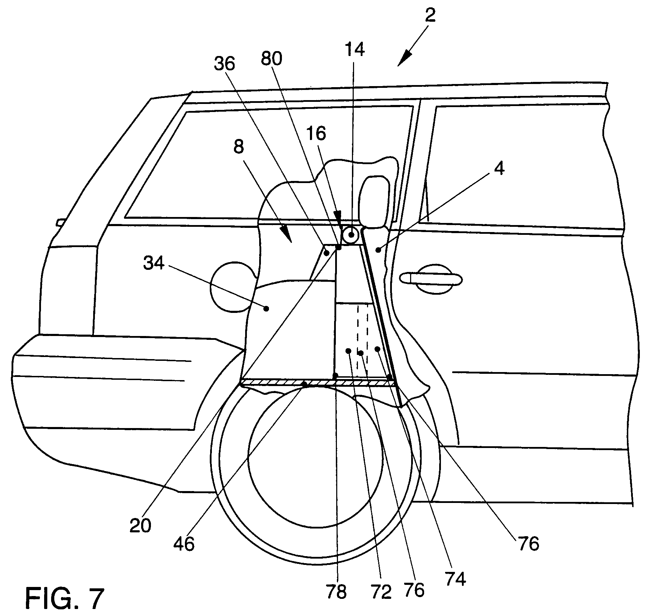

Im Unterschied zu den Figuren 1 bis 6 zeigt Fig. 7 ein Ausführungsbeispiel, bei dem der Aufrollmechanismus 16 an der Rückseite der Rückenlehne 4 der Rücksitzbank 6 befestigt ist, so daß er beim Umklappen der Rückenlehne 4 zusammen mit dieser verschwenkt wird. Das Rollo 18 ist dort an drei Stellen 76, 78, 80 lösbar befestigt, wobei die sich erste (76) am unteren Ende der Rückenlehne 4, die zweite (78) im Abstand davon auf dem Laderaumboden 46 und die dritte (80) über der zweiten in der Nähe des Aufrollmechanismus 16 befindet, so daß das Rollo 18 ein taschenartiges Staufach 50 begrenzt, das durch Umklappen der Rückenlehne 4 von oben her zugänglich ist. Über die beiden Seitenränder des Rollos 18 stehen im Abstand voneinander je zwei Lappen 70, 72 aus einem flexiblen Gewebematerial über, deren freie Ränder durch Klettmaterial- und Flauschmaterialstreifen 74 miteinander verbunden werden, so daß hier die miteinander verbundenen Lappen 70, 72 die seitlichen Begrenzungen 52 des Staufachs 50 bilden. Zum Aufrollen dieses Rollos 18 werden die Klett/Flauschmaterial-Verbindungen 74 und die Befestigung des Rollos 18 an den drei Stellen 76, 78, 80 gelöst und das Rollo 18 in doppelter bzw. im Bereich der Lappen 70, 72 in vierfacher Überlappung aufgewickelt.

## Patentansprüche

1. Vorrichtung zur Sicherung von Ladegut in einem Laderaum hinter einer schrägen Sitz- oder Sitzbankrückenlehne eines Kraftfahrzeugs, mit einer hinter der Rückenlehne angeordneten Rolloanordnung, die ein flächig aufspannbares flexibles Rollo und einen Aufrollmechanismus zum Aufrollen des Rollos umfaßt, dadurch gekennzeichnet, daß das Rollo (18) unter Bildung eines nach hinten zu geschlossenen Staufachs (50) im wesentlichen vertikal hinter der Rückenlehne (4) aufspannbar ist.

2. Vorrichtung nach Anspruch 1, dadurch gekennzeichnet, daß der Aufrollmechanismus (16) im Bereich des oberen Endes der Rückenlehne (4) angeordnet ist.

3. Vorrichtung nach Anspruch 2, gekennzeichnet durch eine unterhalb des Aufrollmechanismus (16) an einem Laderaumboden (46) des Laderaums (8) angeordnete Befestigungseinrichtung (22) für das Rollo (18).

4. Vorrichtung nach Anspruch 2, gekennzeichnet durch eine unterhalb des Aufrollmechanismus (16) auf einem Laderaumboden (46) des Laderaums (8) angeordnete Umlenkeinrichtung für das Rollo (18).

5. Vorrichtung nach Anspruch 1, dadurch gekennzeichnet, daß der Aufrollmechanismus am Boden des Laderaums angeordnet ist.

6. Vorrichtung nach Anspruch 5, gekennzeichnet durch eine oberhalb des Aufrollmechanismus im Bereich des oberen Endes der Rückenlehne angeordnete Befestigungseinrichtung für das Rollo.

7. Vorrichtung nach Anspruch 5, gekennzeichnet durch eine oberhalb des Aufrollmechanismus im Bereich des oberen Endes der Rückenlehne angeordnete Umlenkeinrichtung für das Rollo.

8. Vorrichtung nach einem der Ansprüche 1 bis 7, dadurch gekennzeichnet, das das Rollo mindestens eine lösbar mit der Befestigungseinrichtung (22) verbindbare Halteeinrichtung (42) aufweist.

9. Vorrichtung nach einem der Ansprüche 1 bis 8, dadurch gekennzeichnet, daß der Aufrollmechanismus (16) fahrzeugfest hinter der Rückenlehne (4) montiert ist.

10. Vorrichtung nach einem der Ansprüche 1 bis 9, dadurch gekennzeichnet, daß der Aufrollmechanismus auf der Unterseite einer den Laderaum nach oben verschließenden Hutablage montiert ist.

11. Vorrichtung nach einem der Ansprüche 1 bis 10, dadurch gekennzeichnet, daß das Staufach (50) bei aufrechter Rückenlehne (4) geschlossen ist und sich durch Verschwenken der Rückenlehne (4) nach vorne öffnen läßt.

12. Vorrichtung nach einem der Ansprüche 1 bis 8, dadurch gekennzeichnet, daß der Aufrollmechanismus (16) an der Rückseite der Rückenlehne (4) montiert ist.

13. Vorrichtung nach einem der Ansprüche 1 bis 12, dadurch gekennzeichnet, daß sich das Staufach (50) durch Aufrollen des Rollos (18) öffnen läßt.

14. Vorrichtung nach einem der Ansprüche 1 bis 13, dadurch gekennzeichnet, daß das Staufach (50) seitlich mindestens teilweise verschließbar ist.

15. Vorrichtung nach einem der Ansprüche 1 bis 14, dadurch gekennzeichnet, daß das Staufach (50) seitlich durch Begrenzungen (52) aus einem flexiblen Material verschließbar ist.

16. Vorrichtung nach Anspruch 15, dadurch gekennzeichnet, daß die Begrenzungen (52) lösbar mit dem Rollo (18) und/oder mit der Rückenlehne (4) verbindbar sind.

17. Vorrichtung nach Anspruch 15, dadurch gekennzeichnet, daß die Begrenzungen (52) fest mit dem Rollo (18) verbunden und lösbar mit der Rückenlehne (4) verbindbar sind.

18. Vorrichtung nach Anspruch 16, dadurch gekennzeichnet, daß die Begrenzungen (52) und das Rollo (18) bei aufgerolltem Rollo (18) mehrlagig übereinanderliegen.

19. Vorrichtung nach einem der Ansprüche 1 bis 18, dadurch gekennzeichnet, daß das Rollo (18) angrenzend an seinen freien Rand (20) einen verjüngten Abschnitt (48) aufweist, dessen Seitenränder an die Konturen von zwei an den Seiten des Laderaums (8) angeordneten Radhäuser (36) des Kraftfahrzeugs (2) angepaßt sind.

20. Vorrichtung nach einem der Ansprüche 1 bis 19, gekennzeichnet durch eine oberhalb des Aufrollmechanismus (16) im Bereich eines Dachhimmels des Kraftfahrzeugs angebrachte Befestigungseinrichtung (26) für das Rollo (18).

21. Vorrichtung nach einem der Ansprüche 1 bis 20, gekennzeichnet durch eine an einer Hecktüre des Kraftfahrzeugs angebrachte Befestigungseinrichtung für das Rollo.

22. Vorrichtung nach einem der Ansprüche 1 bis 21, gekennzeichnet durch eine horizontal hinter dem Aufrollmechanismus (16) in der Nähe einer Türöffnung einer Hecktüre des Kraftfahrzeugs angebrachte Befestigungseinrichtung für das Rollo.

23. Vorrichtung nach einem der Ansprüche 1 bis 22, gekennzeichnet durch eine an der Rückseite der Rückenlehne (4) angebrachte Befestigungseinrichtung für das Rollo (18).

24. Kraftfahrzeug mit einer Vorrichtung nach einem der vorangehenden Ansprüche.
